# EUROPEAN PATENT APPLICATION

(11) **EP 2 107 838 A1**
(43) Date of publication of application: **07.10.2009**
(21) Application number: 08305083.1
(22) Date of filing: 03.04.2008
(51) Int. Cl.: H04W 16/10

(54) **Method for configuring a base station and base station in a wireless communication network**

(71) Applicant: Alcatel Lucent, 75008 Paris (FR)
(72) Inventor: Kühn, Edgar Wolfram, 70563 Stuttgart (DE); Ambrosy, Anton, 75233 Tiefenbronn (DE); Haberland, Bernd, 70186 Stuttgart (DE)
(74) Representative: Schneider, Sandra

(57) **Abstract**

The present invention relates to a method for configuring a first set of configuration parameters for a first base station (10) of a wireless communication network (100), said first base station (10) providing service to a first area of said wireless communication network (100), said service being provided according to said first set of configuration parameters of said first base station (10). The method comprises requesting a second set of configuration parameters of at least one neighbouring second base station (22,24), said at least one second base station (22,24) provides service to a second area of said wireless communication network (100), said service being provided according to said second set of configuration parameters of said second base station (22,24). Said request is sent to said at least one neighbouring second base station (22,24) and said second set of configuration parameters is received from said at least one neighbouring second base station (22,24). The first set of configuration parameter is then derived from said second set of configuration parameters. The invention also relates to a first base station (10) of a wireless communication network (100).

## Description

### BACKGROUND OF THE INVENTION

The invention relates to a method for configuring a first set of configuration parameters of a first base station deployed in a wireless communication network. The first base station provides service to a first area of said wireless communication network and the service is provided according to said first set of configuration parameters of said first base station. The invention also relates to a first base station in a wireless communication network.
In the German patent application DE 10 2005 021 531 A1 a system and method for managing a base station in a wireless communication network are described. Configuration parameters of a base station are derived according to configuration parameters of surrounding base stations. The configuration parameters of surrounding base stations are received from a server element in the core network of the wireless communication network.
The configuration parameters of a base station in a wireless communication network define the wireless service that is provided by the base station to an area of the wireless communication network. Such an area is also called a cell of the wireless communication network. The set of parameters that defines the service for the area of the wireless communication network is for example a set of radio parameters for a radio communication network. Such radio parameters comprise for example output power settings, remote electrical tilt of the antenna, sub tones for pilot channels, minimum number of traffic channels, traffic channels to minimize inter-cell interference, cell ID, neighbourhood list, including inter-RAT (radio access technology) neighbours, trigger levels and timers, standard radio parameters, e.g. for congestion and admission control.

### OBJECT OF THE INVENTION

An object of the invention is to provide a method for configuring a base station. A further object of the invention is to provide a corresponding base station.

### SUMMARY OF THE INVENTION

These objects and other objects are solved by the features of the independent claims. Features of preferred embodiments of the invention are subject matter of the dependent claims.
A base station in the context of this invention may serve more than one area of service. The service for each area of service for the base station is then provided according to a set of configuration parameters.
According to one aspect of the invention the method for configuring a first set of configuration parameters of a first base station of a wireless communication network comprises requesting a second set of configuration parameters of at least one neighbouring second base station. Said request is sent to said at least one neighbouring second base station and said second set of configuration parameters is received from said at least one neighbouring second base station.
According to a further preferred embodiment of the invention the first set of configuration parameters is derived from the second set of configuration parameters. This allows for a decentralized mobile network architecture and the self-configuration of a base station and the corresponding area of service.
According to a further preferred embodiment of the invention the self-configuration of the base station and/or the corresponding areas of service takes place during the setup of the first base station. The invention therefore allows for a fully decentralized mobile network architecture where a newly deployed first base station for a corresponding area of service self-configures its own set of radio parameters after the reception of corresponding radio parameters from adjacent second base stations and/or corresponding areas of service.

According to a further preferred embodiment of the invention the determination of the first set of configuration parameters is performed before the first base station starts its operational mode.
The inventive method can also be used for the adaptation during operation of an already defined first set of configuration parameters, e.g. for the adaptation to the environment and the optimization of an already defined first set of configuration parameters.
The invention therefore allows for wireless parameters, e.g. radio parameters to be determined and fixed within each base station in a wireless communication network. The determination of the parameters in the base station can be performed in a self-configured and self-optimized manner without the need of a pre-definition of parameters or of downloading parameters from a server within the core, access or operation network of the wireless communication network. Pre-definition and/or overruling from a server in the wireless communication network can still be used to enhance overall system performance. An advantage of the invention is that the use of pre-defined parameters or parameters downloaded from a server in the core, access or operation network of the communication system is optional.
According to a preferred embodiment of the invention the request for the second set of parameters is sent to the at least one second base station over a wireless communication link. The wireless communication link is preferably a communication link provided by the wireless communication network itself.
According to a further preferred embodiment of the invention the second set of configuration parameters is received from the at least one neighbouring second base station over a wireless communication link. The wireless communication link is preferably a communication link provided by the wireless communication network itself.
According to a preferred embodiment of the invention the request for the second set of configuration parameters is sent to the second base station over a wired communication link. The wired communication link is preferably a backbone communication link of the wireless communication network.

According to a preferred embodiment of the invention the request for the second set of configuration parameters is sent to the second base station over a backbone communication link that comprises a partly wired and a partly wireless link.
According to a further preferred embodiment of the invention the second set of configuration parameters is received from the at least one neighbouring second base station over a wired communication link. The wired communication link is preferably a backbone communication link of the wireless communication network.
According to a further preferred embodiment of the invention the second set of configuration parameters is received from the at least one neighbouring second base station over a backbone communication link that comprises a partly wired and a partly wireless link.
The invention also provides a first base station of a wireless communication network. The first base station provides service to a first area of the wireless communication network. The service to said first area is provided according to a first set of configuration parameters of the first base station. The first base station comprises means to request a second set of configuration parameters of at least one neighbouring second base station. The at least one second base station provides service to a second area of the wireless communication network. The service to the second area of the wireless communication network is provided according to the second set of configuration parameters of the second base station. The first base station further comprises means to send the request for the second set of configuration parameters to the at least one neighbouring second base station and means to receive the second set of configuration parameters from the at least one neighbouring second base station.
According to another aspect of the invention the first base station further comprises means to derive the first set of configuration parameters from the second set of configuration parameters. This allows for the exchange of parameters directly in between base stations within the wireless communication network.
According to a preferred embodiment of the invention the means of the first base station to request the second set of configuration parameters is a means to request the second set of configuration parameters over a wireless communication link. Preferably the wireless communication link is a wireless link provided by the wireless communication system itself.
According to a preferred embodiment of the invention the means to request said second set of configuration parameters is a means to request the second set of configuration parameters over a wired communication link. Preferably, the wired communication link is a backbone communication link of the wireless communication network.
According to a preferred embodiment of the invention the means to request said second set of configuration parameters is a means to request the second set of configuration parameters over a backbone communication link that comprise a partly wired and a partly wireless link.
According to a further preferred embodiment of the invention the means to receive the second set of configuration parameters from the second base station are means over a wireless communication link. Preferably, the wireless communication link is a wireless communication link provided by the wireless communication network itself.
According to a further preferred embodiment of the invention the means to receive the second set of configuration parameters from the second base station are means over a wired communication link. The wired communication link preferably is a backbone communication link of the wireless communication network.
According to a further preferred embodiment of the invention the means to receive the second set of configuration parameters from the second base station are means over a backbone communication link that comprise a partly wired and a partly wireless link.
The current invention allows for self-configuration and self-optimization that are important features of future wireless communication networks. The invention supports an exchange of parameters directly in between base stations without the need of a server of the core, access or operation network to enable the self-configuration and self-optimization. The self-configuration and self-optimization can thus be performed in a fully decentralized architecture. The invention can therefore be applied for a network scanning procedure which is started by a newly deployed base station after setting up network connectivity. Network connectivity can for example be set up by allocating a valid IP address. The network scanning procedure allows to know relevant neighbour base stations and their corresponding cells. The parameter configurations of the neighbouring base stations can be known and the own environment of the first base station can be deduced from the parameter configurations of the neighbouring base stations. Thus the own parameter configuration of the first base station can be deduced from the known environment of the first base station before the commercial operational mode of the new first base station is entered.
The set of configurations of a first and second base stations are preferably radio-parameter configurations. Preferably radio parameters are requested by a base station from neighbouring base stations which belong to the same radio technology within the same radio access network. Additionally information about the environment could also be retrieved from neighbouring cells of a different radio technology, possibly in a multi standard base station serving area which belongs to different radio technologies. The request and response of radio parameters are preferably transmitted in e.g. IP based messages. Preferably, the request and response of parameter sets are exchanged directly in between base stations over a backbone communication link, e.g. an IP transport network.

### BRIEF DESCRIPTION OF THE DRAWINGS

Other characteristics and advantages of the invention will become apparent in the following detailed description of preferred embodiments of the invention illustrated by the accompanying drawings given by means of non-limiting illustrations.
Figure 1 shows a schematic overview of a wireless communication network,
Figure 2 shows an overview of a method for setting up a new base station in the wireless communication network.

### DETAILED DESCRIPTION OF THE INVENTION

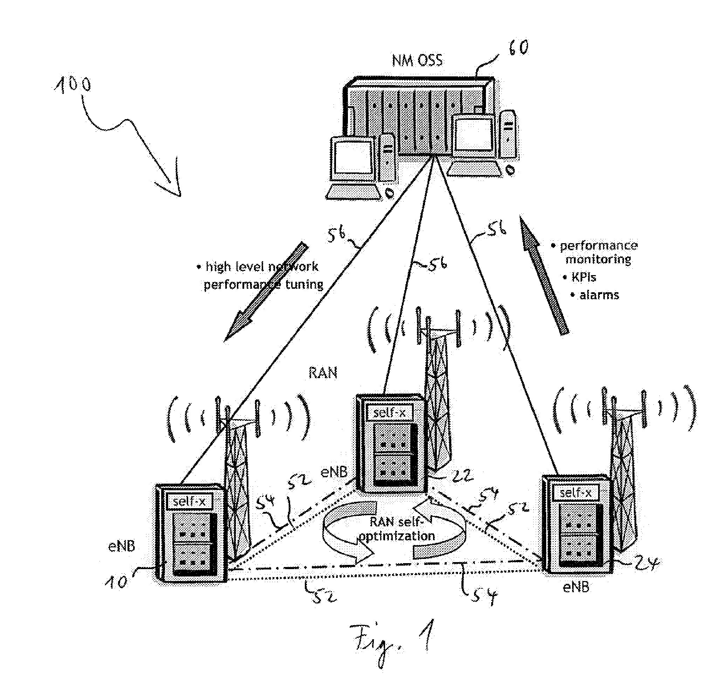

Figure 1 shows an overview of a wireless communication network 100. The wireless communication network comprises a server 60 in the operation network, e.g. a network management operations server. The server 60 is connected to the base stations 10, 22 and 24 over wired communication links 56. The base stations comprise a first base station 10 and second base stations 22 and 24. The base stations are inter-connected among each other over wireless communication links 52 and/or wired communication links 54. The wireless communication links 52 are preferably communication links provided by the wireless communication network 100 over the base stations 10, 22 and 24. The wired communication links 54 are backbone communication links, preferably IP based communication links.
The base stations 10, 22 and 24 provide wireless service to their areas of service according to their configuration parameters. A base station 10, 22 or 24 may serve more than one area of service. In this case each area of service is served according to a respective set of configuration parameters. In case of a radio communication network the configuration parameters of the base stations 10, 22 and 24 are the radio parameters. Areas of service are often referred to as cells in the case of certain radio communication networks.
Radio parameters depend on the topological environment of a base station. Radio parameter settings must be specified with respect to the conditions around the respective base station, e.g. urban or rural conditions. Therefore, if a base station 10 is newly deployed it has to learn its topological environment as well as deployment specific configuration. The topological environment as well as the deployment specific configuration can be learned from the neighbouring base stations 22 and 24. In a second step the base station 10 needs to derive its own radio parameters by applying implemented self-configuration or self-optimization procedures. The base station 10 thereby derives its own e.g. radio parameters from the e. g. radio parameters received from the surrounding base stations 22 and 24.
By exchanging their radio parameters among each other the base stations 10, 22 and 24 can perform a self-optimization of the radio access network in a decentralized manner without needing the central server 60. Over the communication links 56 the central server 60 performs high level network performance tuning and monitors counters, the performance of the KPIs and the alarms of these base stations 10, 22 and 24. KPIs are key performance indicators of the base stations 10, 22 and 24 of the wireless communication network 100.

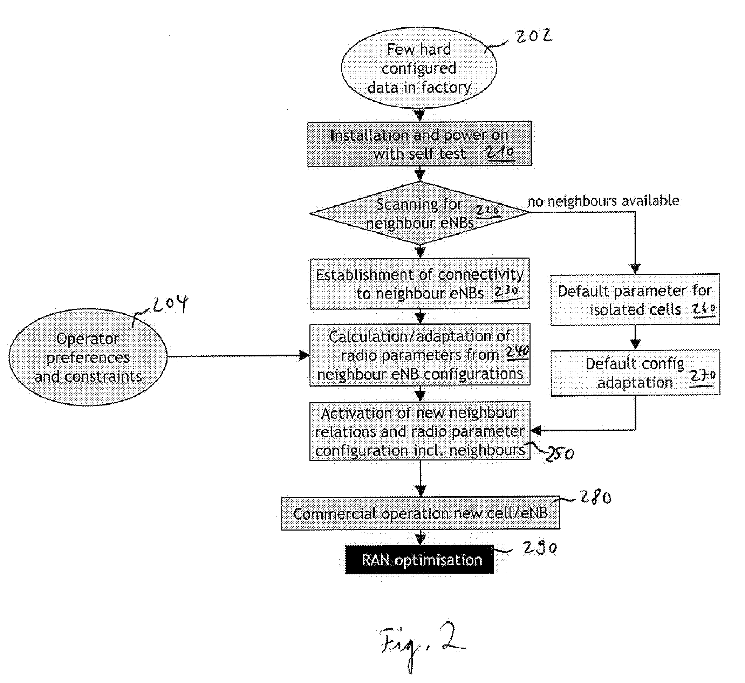

Figure 2 shows an example of a setup of a first base station 10. The first base station 10 comprises hard configured data 202 that has been hard configured during manufacturing of the first base station 10. The quantity of hard configured data is preferably small to allow for a flexible deployment of the first base station 10. In step 210 the installation and power on with self-test of the base station 10 is performed. In step 220 the base station 10 scans for neighbouring base stations. The scan for neighbouring base stations is either performed over a wireless link provided by the wireless communication network or over a wired backbone network, e.g. IP network. If neighbouring base stations 22 and 24 are found the establishment of the connectivity to the neighbouring base stations 22 and 24 is performed in step 230. Over this connectivity to the neighbouring base stations 22 and 24 parameter sets of those neighbouring base stations 22 and 24 are requested and received by the base station 10. The parameter sets are preferably radio parameters. In step 240 the base station 10 performs the calculation and adaptation of its own parameters, preferably radio parameters, taking into account the parameter sets of the neighbouring base stations 22 and 24. This calculation/adaptation is performed in step 240. In step 250 the base station 10 activates the neighbour relations to the base stations 22 and 24 and activates its own parameter sets, preferably radio parameter sets.
If in step 220 no neighbouring base stations are found default parameters for isolated cells are activated in the base station 10 in step 260. Those default parameters are an example for hard configured data 202 that have been implemented in the base station 10 during the manufacturing process. In step 270 the base station then adapts its default configuration.
In step 250 base station 10 activates its parameter sets, preferably its radio parameter configuration. In step 280 the base station 10 is then put into commercial operation. Examples for base stations are enhanced Node Bs (eNB).
Typical examples for radio parameters which are exchanged after a network scanning procedure to detect neighbouring base stations and their areas of service are listed in the following. These parameters may be needed to self-configure the required radio parameters of a newly deployed base station 10 before this base station 10 starts its operational mode. An example of a radio parameter is the location of a base station 10, 22, 24 and possibly the time and date when this base station 10, 22 and 24 starts its operational mode. This parameter is useful for simultaneous reconfiguration of neighbour cells and to cope with time dependent configurations of neighbouring base stations. Another example for a radio parameter is the location of neighbouring base stations 22, 24. For certain self-configuration and self-optimization use cases a set of radio parameter is useful that gives the arrangement, number and direction of antenna patterns of neighbouring base stations 22, 24. Another useful radio parameter is information on neighbouring cell size, e.g. if it is a macro, micro, pico or femto cell. Another useful radio parameter is information on type and PLMN ID (public land mobile network ID) of neighbour cells, e.g. hierarchical cells or overlay cells which belong to different radio access technologies. Another radio parameter is information on established neighbour relations of neighbour cells. A further example of a radio parameter is information of identifiers for an auto assignment of identities, e.g. tracking area IDs. Further examples of radio parameters are used frequency bands, power settings and power restrictions in uplink and downlink, distribution of pilot signals over physical resource blocks and/or handover parameters like threshold values and timers. Further examples of radio parameters are scheduler parameter settings like fairness, cell throughput and delay, information on counters and KPIs like call drops and load of neighbouring cells. Information on counters and KPIs is useful for self-configuration decisions, for example if a new base station 10 is deployed for coverage or capacity reasons. A further example for radio parameters is a feedback on date and time when a new base station 10 starts the operational mode and information on self-configured radio parameters of this newly deployed base station 10 before it starts its operational mode. Such a feedback in information can be used for a fine tuning of radio parameters in neighbouring base stations 22, 24.
In addition the network scanning of a base station 10 of neighbouring cells can be used for a self-configuration of an initial neighbour cell list of this base station 10, e.g. for candidate cells for handovers of this base station 10.

## Claims

1. Method for configuring a first set of configuration parameters of a first base station (10) of a wireless communication network (100), said first base station (10) providing service to a first area of said wireless communication network (100), said service being provided according to said first set of configuration parameters of said first base station (10), the method comprising requesting a second set of configuration parameters of at least one neighbouring second base station (22, 24), said at least one second base station (22, 24) providing service to a second area of said wireless communication network (100), said service being provided according to said second set of configuration parameters of said second base station (22, 24), said request being sent to said at least one neighbouring second base station (22, 24), receiving said second set of configuration parameters from said at least one neighbouring second base station (22, 24).

2. Method according to claim 1, further comprising deriving said first set of configuration parameters from said second set of configuration parameters.

3. Method according to claim 1 or 2, **characterized by** being performed during set-up of said first base station (10).

4. Method according to claim 1, 2 or 3, **characterized by** said request being sent to said at least one second base station (22, 24) over a wireless communication link (52).

5. Method according to claim 1, 2 or 3, **characterized by** said request being sent to said at least one second base station over a wired communication link (54).

6. Method according to one of the claims 1 to 5, **characterized by** receiving said second set of configuration parameters from said at least one neighbouring second base station over a wireless communication link (52).

7. Method according to one of the claims 1 to 5, **characterized by** receiving said second set configuration parameters from said at least one neighbouring second base station over a wired communication link (54).

8. First base station (10) of a wireless communication network (100) providing service to a first area of said wireless communication network (100), said service being provided according to a first set of configuration parameters of said first base station (10), said first base station (10) comprising means to request a second set of configuration parameters of at least one neighbouring second base station (22, 24), said at least one second base station (22, 24) providing service to a second area of said wireless communication network (100), said service being provided according to said second set of configuration parameters of said second base station (22, 24), means to send said request to said at least one neighbouring second base station (22, 24), means to receive said second set of configuration parameters from said at least one neighbouring second base station (22, 24).

9. First base station according to claim 8, further comprising means to derive said first set of configuration parameters from said second set of configuration parameters.

10. First base station according to claim 8 or 9, **characterized by** said means to request said second set of configuration parameters being means to request said second set of configuration parameters over a wireless communication link (52).

11. First base station according to claim 8 or 9, **characterized by** said means to request said second set of configuration parameters being means to request said second set of configuration parameters over a wired communication link (54).

12. First base station according to one of the claims 8 to 11, **characterized by** said means to receive said second set of configuration parameters from said at least one neighbouring second base station being means to receive said second set of configuration parameters over a wireless communication link (52).

13. First base station according to one of the claims 8 to 11, **characterized by** said means to receive said second set of configuration parameters from said at least one neighbouring second base station being means to receive said second set of configuration parameters over a wired communication link (54).
